# EUROPEAN PATENT SPECIFICATION

(11) **EP 4 086 093 B1**
(45) Date of publication and mention of the grant of the patent: **23.04.2025**
(21) Application number: 20909942.3
(22) Date of filing: 24.12.2020
(51) Int. Cl.: B60H 1/00, F04D 25/08, F04D 29/58

(54) **VEHICULAR AIR-CONDITIONING DEVICE**
FAHRZEUGKLIMAANLAGE
DISPOSITIF DE CLIMATISATION POUR VÉHICULE

(30) Priority: 01.01.2020 JP 2020000002
(43) Date of publication of application: 09.11.2022
(73) Proprietor: Valeo Japan Co., Ltd., Kumagaya-Shi SAITAMA 360-0193 (JP)
(72) Inventor: NAGANO, Hideki, Kumagaya-shi Saitama 360-0193 (JP)
(74) Representative: Valeo Systèmes Thermiques
(86) International application number: PCT/JP2020/048360
(87) International publication number: WO 2021/137296

(56) References cited:
- DE-A1- 102011 004 868
- JP-A- 2007 153 159
- JP-A- 2008 081 029
- JP-A- 2018 001 820
- JP-A- 2021 123 275
- US-A1- 2004 093 885

## Description

### Technical Field

The present invention relates to a vehicle air conditioner for taking in inside and/or outside air of a cabin and regulating a temperature.

### Background Art

A vehicle such as a passenger vehicle mounts therein a vehicle air conditioner that regulates (conditions) a temperature of inside and/or outside air of a cabin. An air conditioner main body section of a commonly used vehicle air conditioner is mounted in a front portion of the vehicle. The air temperature-regulated (temperature-conditioned) by this air conditioner main body section can be blown by ducts into a plurality of regions of the cabin including a region for front seats and a region for rear seats. However, a duct for rear seats is longer than a duct for front seats and, therefore, higher in passage resistance. This causes a difference between an amount of air blown from the duct for front seats and an amount of air blown from the duct for rear seats.

To address this problem, a technique for making equal the amount of air blown from the duct for front seats and the amount of air blown from the duct for rear seats is known in, for example, Patent Literature 1. A vehicle air conditioner known in Patent Literature 1 includes not only a main fan (first fan) but also an auxiliary fan (second fan) that lies between an air conditioner main body section and a duct for rear seats. Increasing the amount of air blown to the duct for rear seats by the auxiliary fan makes it possible to solve insufficient air conditioning for the region for rear seats.

The air temperature-regulated by the air conditioner main body section is guided into the auxiliary fan. Owing to this, a motor that drives the auxiliary fan is affected by the temperature of warm air flowing from the air conditioner main body section. In winter months, in particular, the vehicle air conditioner is used as a cabin heater. The warm air heated by a heater core in the air conditioner main body section is guided into the auxiliary fan. A motor is prone to be affected by heat since the warm air flows near the motor. There is room for improvement in a durability of the motor.

A technique for air-cooling a fan driving motor in a vehicle air conditioner is known in, for example, Patent Literature 2. The vehicle air conditioner known in Patent Literature 2 has a fan that guides outside air into an air conditioner main body section and air-cools the motor for driving this fan. The outside air is guided into a fan case by a suction force of the fan. Part of the guided outside air is guided to an outer peripheral surface of a motor case, thereby air-cooling the motor. The outside air after air-cooling the motor as well as a rest of the guided outside air is suctioned by the fan and delivered to a heater core and an evaporator in the air conditioner main body section. The conditioned air temperature-regulated by the heater core and the evaporator is blown to a plurality of regions of a cabin.

The fan of Patent Literature 2 corresponds to the main fan of Patent Literature 1. That is, the vehicle air conditioner known in Patent Literature 2 does not include the auxiliary fan of the vehicle air conditioner known in Patent Literature 1.

It may be considered to adopt the technique of Patent Literature 2 so that the motor that drives the auxiliary fan of Patent Literature 1 is not affected by the heat of the warm air heated by the heater core in the air conditioner main body section. In that case, the auxiliary fan suctions both the warm air from the air conditioner main body section and the outside air for air-cooling, and the outside air for air-cooling air-cools the motor for driving the auxiliary fan. Here, the air guided to cool the motor flows out to an air outlet passage for the auxiliary fan via the motor. That is, the air guided to cool the motor is mixed with the air temperature-regulated by the air conditioner main body section, resulting in concern of a fluctuation in the temperature of the temperature-regulated air. The techniques are incapable of appropriately controlling the temperature of the conditioned air blown by the auxiliary fan and not feasible.

### Prior Art Documents

### Patent Literatures

Patent Literature 1: JP-A-2004-161059
Patent Literature 2: JP-A-2006-177289

Further examples are disclosed by JP2007153159.

### Disclosure of the Invention

### Problem to be Solved by the Invention

An object of the present invention is to provide a technique capable of cooling a motor that drives a second fan in a vehicle air conditioner including: an air conditioner main body section including a first fan (main fan); a duct for rear seats; and the second fan (auxiliary fan) that is coupled to the duct for rear seats for securing an air volume of conditioned air circulating in this duct for rear seats. Means for Solving the Problems

While reference signs in the accompanying drawings are added in parentheses for helping understand the present invention, the reference signs are not intended to limit the present invention to the forms in the drawings.

The present invention provides a vehicle air conditioner (20) including:
an air conditioner main body section (30) including a housing (31) that has an air flow passage (33) provided inside; a first fan (32) that feeds air guided from inside of a cabin (11) and/or outside of the cabin (11) to the air flow passage (33); an evaporator (41) that is provided in the air flow passage (33); a heater core (42) that is provided downstream of the evaporator (41); and a temperature regulation door (43) that is provided between the evaporator (41) and the heater core (42) and that regulates a ratio of air heading for the heater core (42) to air bypassing the heater core (42); and
a duct unit for rear seats (50) that is connected to a downstream side of the heater core (42) in the housing (31) and that guides conditioned air temperature-regulated by the air conditioner main body section (30) to rear seats of the cabin (11), the duct unit for rear seats (50) including a second fan (52) that suctions and delivers the conditioned air and a duct for rear seats (51),
the duct unit for rear seats (50) having a second fan driving motor (80) that directly drives a centrifugal fan (72) accommodated in a fan case (71) of the second fan (52) by a rotary shaft (81), the vehicle air conditioner (20) including:
   an air guide port (106) that opens to the housing (31) to guide air for cooling a motor from downstream of the first fan (32) and upstream of the temperature regulation door (43) in the air flow passage (33);
   a guide passage (107) that guides the air for cooling the motor guided from the air guide port (106) to the second fan driving motor (80); and
   a discharge passage (108) that discharges the air for cooling the motor after passing through the second fan driving motor (80) to the cabin (11).

Preferably, the air guide port (106) is located downstream of the evaporator (41).

Preferably, the air guide port (106) is provided in a bottom plate (111) in the housing (31).

Preferably, at least a portion (107a) of the guide passage (107) is formed integrally with the housing (31).

It is preferable that
the second fan driving motor (80) includes a cylindrical motor case (84) that extends along the rotary shaft (81),
the motor case (84) includes an air inlet hole (101) that is provided on one side of the rotary shaft (81) in an axial direction, and an air outlet hole (102) that is provided on other side of the rotary shaft (81) in the axial direction,
the duct unit for rear seats (50) includes a cover (90) that entirely covers at least an outer peripheral surface of the motor case (84), and
the cover (90) includes a first opening (104) that can communicate the guide passage (107) with the air inlet hole (101), and a second opening (105) that can communicate the air outlet hole (102) with the discharge passage (108).

### Effect of the Invention

According to the present invention, it is possible to cool a motor that drives a second fan in a vehicle air conditioner that includes: an air conditioner main body section including a first fan; a duct for rear seats; and the second fan (auxiliary fan) that is coupled to the duct for rear seats for securing an air volume of conditioned air circulating in this duct for rear seats.

### Brief Description of the Drawings

Fig. 1 is a diagram schematically representing a vehicle in which a vehicle air conditioner according to a first embodiment is mounted.
Fig. 2 is a cross-sectional view illustrating cross-sectional configurations of an air conditioner main body section illustrated in Fig. 1 while elements incorporated in a second fan driving motor are omitted.
Fig. 3 is a cross-sectional view of a second fan, the second fan driving motor, and an air-cooling device illustrated in Fig 2.
Fig. 4 is a cross-sectional view taken along a line 4-4 of Fig. 3.
Fig. 5 is an enlarged view of the second fan driving motor and the air-cooling device illustrated in Fig. 4.
Fig. 6 is an exploded view of the air-cooling device illustrated in Fig. 3.
Fig. 7 is a cross-sectional view of a housing and a first guide passage illustrated in Fig. 6.
Fig. 8 is a cross-sectional view of a second fan and an air-cooling device in a vehicle air conditioner according to a second embodiment (and corresponds to cross-sectional positions of Fig. 4).

### Best Mode For Carrying Out The Invention

Embodiments of the present invention will be described hereinafter with reference to the accompanying drawings. It is noted that forms illustrated in the accompanying drawings are given by way of example and that the present invention is not limited to the forms. In the description, left and right refer to left and right with reference to a passenger getting aboard a vehicle and front and rear refer to front and rear with reference to a vehicle travelling direction. In addition, in the drawings, Fr denotes front, Rr denotes rear, Le denotes left as viewed by the passenger, Ri denotes right as viewed by the passenger, Up denotes up, and Dn denotes down.

### <First embodiment>

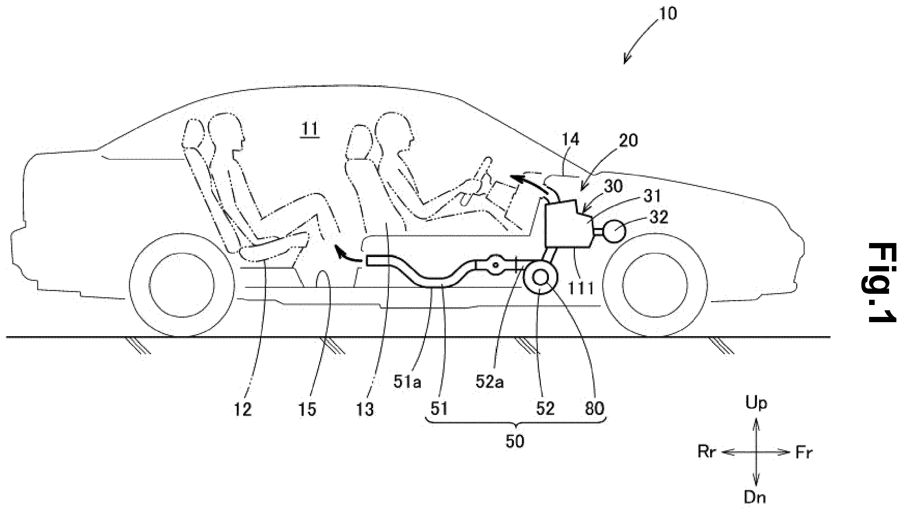

A vehicle air conditioner 20 according to a first embodiment will be described with reference to Figs. 1 to 7. As illustrated in Fig. 1, a vehicle 10 such as a passenger vehicle mounts therein the vehicle air conditioner 20 that regulates (conditions) a temperature of air in a cabin 11. This vehicle air conditioner 20 includes an air conditioner main body section 30 and a duct unit for rear seats 50. The air conditioner main body section 30 can regulate (condition) a temperature of air fed from a first fan 32 and supply the air to the cabin 11 from a plurality of air outlets (delivery sections). The duct unit for rear seats 50 can feed part of the air temperature-regulated by the air conditioner main body section 30 toward rear seats 12. The vehicle air conditioner 20 will be described hereinafter in detail.

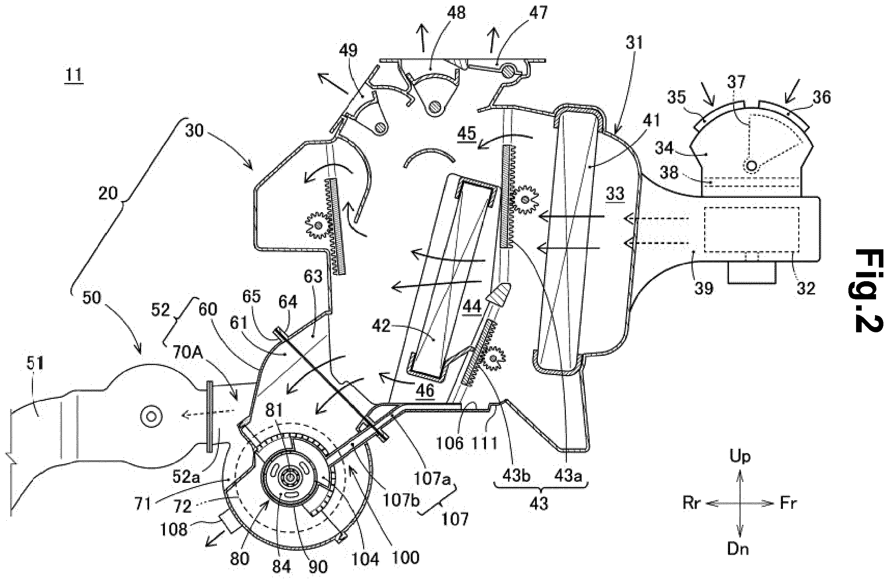

As illustrated in Fig. 2, the air conditioner main body section 30 is disposed in a front portion of the vehicle 10 and includes a housing 31, the first fan 32, an evaporator 41, a heater core 42, and a temperature regulation door 43. An air flow passage 33 is provided in the housing 31.

The first fan 32 is a main fan (upstream blower) located upstream of the housing 31 and feeds air guided from inside and/or outside of the cabin 11 to the air flow passage 33 in the housing 31.

An intake section 34 is provided on a suction side of the first fan 32. This intake section 34 includes an inside air inlet 35, an outside air inlet 36, an inside/outside switching door 37, and a filter 38. The inside air inlet 35 can guide the air from inside of the cabin 11. The outside air inlet 36 can guide the air from outside of the cabin 11. The inside/outside switching door 37 switches over opening/closing of the inside air inlet 35 and the outside air inlet 36. The filter 38 purifies the air guided from the inside air inlet 35 and the outside air inlet 36.

A delivery side of the first fan 32 is connected by a duct 39 to an upstream portion of the air flow passage 33 in the housing 31. It is noted that Fig. 2 illustrates a state in which the first fan 32 is disposed in the front portion of the vehicle with respect to the housing 31 for helping understand the description. In actuality, the first fan 32 is disposed in a vehicle width direction with respect to the housing 31.

The evaporator 41 (cooling heat exchanger 41), the heater core 42 (heating heat exchanger 42), and the temperature regulation door 43 are incorporated in the housing 31, i.e., provided in the air flow passage 33. The evaporator 41 and the heater core 42 are disposed in this order in series from an upstream side to a downstream side of the air flow passage 33. That is, the heater core 42 is provided downstream of the evaporator 41.

The temperature regulation door 43 is provided between the evaporator 41 and the heater core 42 in the air flow passage 33, and regulates a ratio of the air heading for the heater core 42 to the air bypassing this heater core 42. The air flow passage 33 in the housing 31 is divided into three passages 44 to 46. The temperature regulation door 43 can switch the three passages 44 to 46 and is formed by, for example, a first door 43a and a second door 43b.

The three passages 44 to 46 will be described hereinafter while being distinctively denoted by "first passage 44," "second passage 45," and "third passage 46," respectively. The first passage 44 is a passage (passage toward the heater core 42) for the heater core 42 to heat the air passed through and cooled by the evaporator 41. The second passage 45 is a passage bypassing the first passage 44 and heading for a upper side of the housing 31. The third passage 46 is a passage bypassing the first passage 44 and heading for a lower side of the housing 31. A defroster delivery section 47 can feed the air from the first passage 44 and/or the second passage 45 toward a windshield. A side vent delivery section 48 and a center vent delivery section 49 can feed the air from the first passage 44 and/or the second passage 45 toward an upper half of a body of each of passengers seated in front seats 13.

Furthermore, the housing 31 includes a front foot delivery port (not illustrated) that can feed the air toward legs of the passengers seated in the front seats 13 (refer to Fig. 1).

The duct unit for rear seats 50 is connected to a downstream side of the heater core 42 in the housing 31 (out of the housing 31), and guides the conditioned air temperature-regulated by the air conditioner main body section 30 to the rear seats 12 in the cabin 11. This duct unit for rear seats 50 includes two ducts for rear seats 51 (only one of which is illustrated), a second fan 52 that suctions and delivers the conditioned air from the housing 31, and a second fan driving motor 80 that directly drives a centrifugal fan 72 accommodated in each fan case 71 of this second fan 52 by a rotary shaft 81 (motor shaft 81). The second fan 52 suctions, for example, the conditioned air from the housing 31 and delivers the conditioned air to the ducts for rear seats 51.

As illustrated in Figs. 1 and 2, the two ducts for rear seats 51 are located at a vehicle widthwise center of the vehicle 10 and extend from a delivery port 52a of the second fan 52 to the rear seats 12.

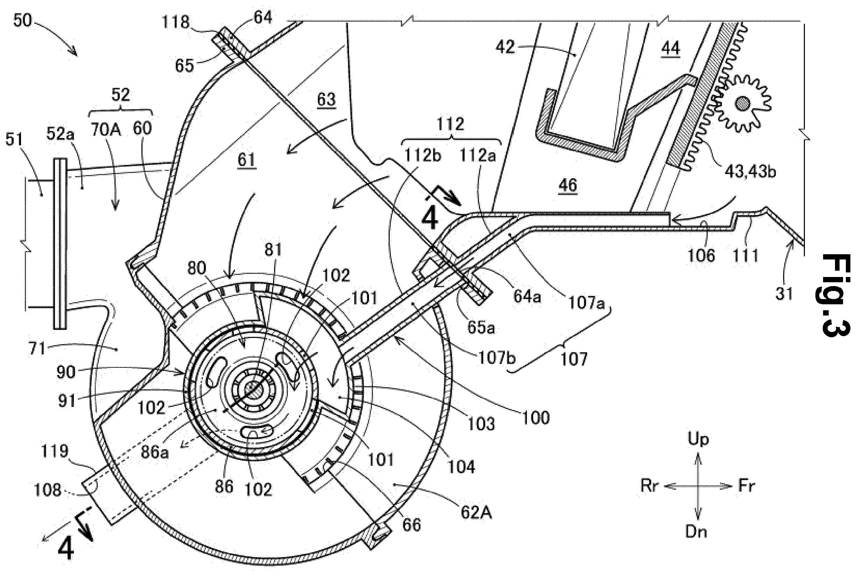

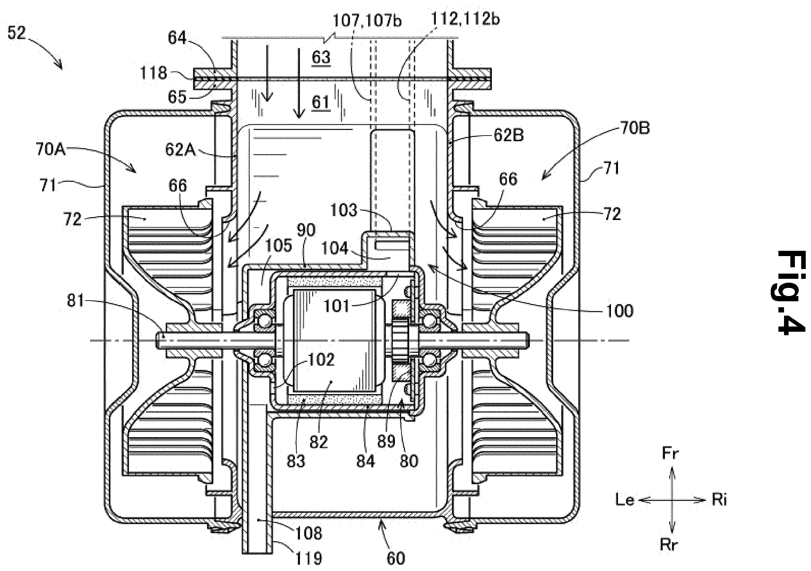

As illustrated in Figs. 3 and 4, the second fan 52 is an auxiliary fan (downstream blower) located downstream of the housing 31. This second fan 52 is formed from a suction case 60 (central case 60) located at a vehicle widthwise center of the second fan 52 and two fan sections 70A and 70B provided on two ends of this suction case 60 in the vehicle widthwise direction.

The suction case 60 is a generally cylindrical member that extends in the vehicle width direction and has a suction port 61 at a center of the suction case 60 and partition walls 62A and 62B on the two ends of the suction case 60. The suction port 61 is connected to a rear seat delivery port 63 of the housing 31 by flanges 64 and 65. The partition walls 62A and 62B each have a fan inlet port 66 generally at a center. One of the two partition walls 62A and 62B will be referred to as "first partition wall 62A" and the other will be referred to as "second partition wall 62B," hereinafter.

The two fan sections 70A and 70B have so-called bilaterally symmetric configurations such that the fan sections 70A and 70B face each other across the suction case 60. One of the two fan sections 70A and 70B will be referred to as "first fan section 70A" and the other will be referred to as "second fan section 70B," hereinafter.

The first fan section 70A has the fan case 71 (scroll case 71) having one closed end and the centrifugal fan 72 rotatably accommodated in this fan case 71. The fan case 71 is attached to the suction case 60 in a state of covering an open end on the first partition wall 62A. As obvious from the description above, the centrifugal fan (72) is accommodated in the fan case (71) of the second fan (52). The second fan section 70B is similar in configurations to the first fan section 70A and will not be described with same reference signs adding to the same elements. The fan case 71 of the second fan section 70B is attached to the suction case 60 in a state of covering an open end on the second partition wall 62B.

The conditioned air temperature-regulated by the air conditioner main body section 30 (refer to Fig. 2) enters the suction case 60 via the suction port 61 from the rear seat delivery port 63 and is suctioned to the first fan section 70A and the second fan section 70B from this suction case 60.

The two fan sections 70A and 70B are directly driven by one second fan driving motor 80. This second fan driving motor 80 is configured as a so-called double-shaft motor that has one rotary shaft 81 (motor shaft 81) protruding from two ends of the motor case 84 in the vehicle width direction, and accommodated in and supported by the suction case 60. The centrifugal fans 72 of the two fan sections 70A and 70B are directly attached to two end portions of this rotary shaft 81.

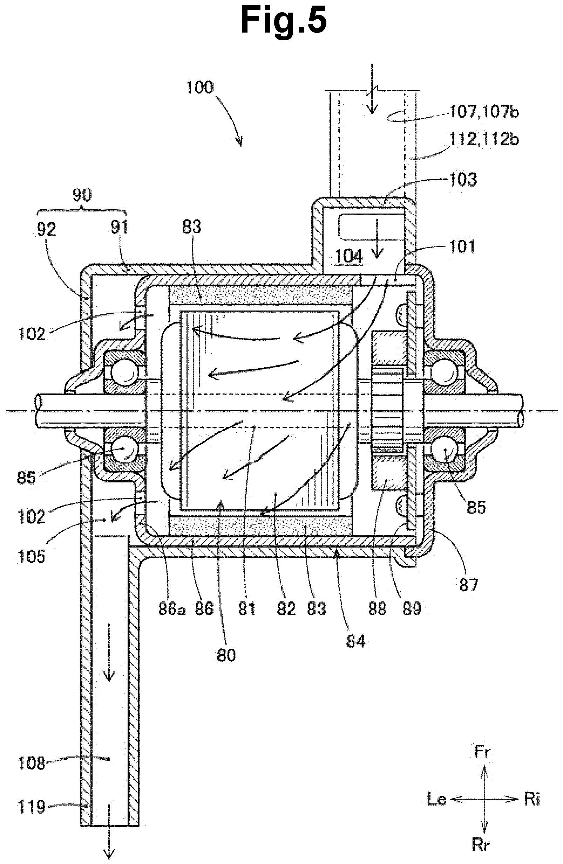

More specifically, as illustrated in Fig. 5, the second fan driving motor 80 is configured as a so-called inner rotor type brush motor that includes, as principal elements, the rotary shaft 81, a rotor 82 provided on this rotary shaft 81, a stator 83 located to surround an outer periphery of this rotor 82, and the motor case 84 that accommodates the rotor 82 and the stator 83.

The rotary shaft 81 is rotatably supported by the motor case 84 via bearings 85. The motor case 84 is a cylindrical member that extends along the rotary shaft 81. Specifically, this motor case 84 is formed by a cylindrical (cup-shaped) case main body 86 that has a bottom plate 86a on one end and a cap 87 that blocks an open end of this case main body 86. A base 89 including a circuit that controls rotation of the second fan driving motor 80 and a brush 88 is accommodated in this motor case 84. This base 89 is located on one side of the rotary shaft 81 in the axial direction, e.g., closer to the cap 87 in the motor case 84.

At least an outer peripheral surface of the motor case 84 is entirely covered with a cover 90. This cover 90 is a cup-shaped member that includes a cylindrical cover main body 91 and a bottom plate 92 provided on one end of this cover main body 91. It is preferable that no gap is present between the cylindrical outer peripheral surface of the motor case 84 and a cylindrical inner peripheral surface of the cover main body 91. This is because it is possible to reduce the air released from the gap as much as possible.

As illustrated in Fig. 2, the vehicle air conditioner 20 includes an air-cooling device 100 that air-cools the second fan driving motor 80. This air-cooling device 100 cools the second fan driving motor 80 using part of the air flowing in the air flow passage 33 in the housing 31 and that is not temperature-regulated yet. The air-cooling device 100 will be described in detail hereinafter.

As illustrated in Fig. 5, the motor case 84 has at least one air inlet hole 101 and at least one air outlet hole 102 penetrating through inside and outside of the motor case 84. The air inlet hole 101 is provided on one side of the rotary shaft 81 in the axial direction, e.g., closer to the cap 87 in a cylindrical portion of the motor case 84 (cylindrical portion of the case main body 86). The air outlet hole 102 is provided on the other side of the rotary shaft 81 in the axial direction, e.g., in the bottom plate 86a in the motor case 84. Preferably, as illustrated in Fig. 3, a plurality of air inlet holes 101 and a plurality of air outlet holes 102 are arranged at equal pitches radially about the rotary shaft 81.

As illustrated in Figs. 3 and 5, a bulge section 103 that bulges radially outward from the cover main body 91 of the cover 90 in such a manner as to surround the plurality of air inlet holes 101 of the motor case 84 is provided on the cover main body 91. A first space section 104 is formed in this bulge section 103. This first space section 104 communicates with an interior of the motor case 84 via the plurality of air inlet holes 101 and can function as a distribution header for distributing the air to the plurality of air inlet holes 101. This first space section 104 will be paraphrased as "first opening 104," hereinafter as appropriate.

As illustrated in Fig. 5, a second space section 105 at a fixed distance is present between the bottom plate 86a of the motor case 84 and the bottom plate 92 of the cover 90. This second space section 105 communicates with the interior of the motor case 84 via the plurality of air outlet holes 102 and can function as a gathering header for gathering the air flowing out from the plurality of air outlet holes 102. This second space section 105 will be paraphrased as "second opening 105, " hereinafter as appropriate.

In this way, the cover 90 has the first opening 104 and the second opening 105.

As illustrated in Fig. 2, the air-cooling device 100 further includes an air guide port 106, a guide passage 107, and a discharge passage 108.

The air guide port 106 is open to the housing 31 in such a manner as to guide the air for cooling the motor from downstream of the first fan 32 and upstream of the temperature regulation door 43 in the air flow passage 33. Preferably, this air guide port 106 is located downstream of the evaporator 41. More preferably, this air guide port 106 is provided in a bottom plate 111 of the housing 31. By way of example, the air guide port 106 is formed by a recess portion formed in this bottom plate 111 by causing the bottom plate 111 to bulge downward.

As illustrated in Fig. 3, the guide passage 107 guides the air for cooling the motor guided from the air guide port 106 to the second fan driving motor 80. The first opening 104 provided in the cover 90 can communicate the guide passage 107 with the air inlet holes 101. The second fan driving motor 80 is located in rear of the housing 31 and below the bottom plate 111 of this housing 31. Owing to this, the guide passage 107 extends linearly while inclining rearward and downward from the air guide port 106 to the first opening 104.

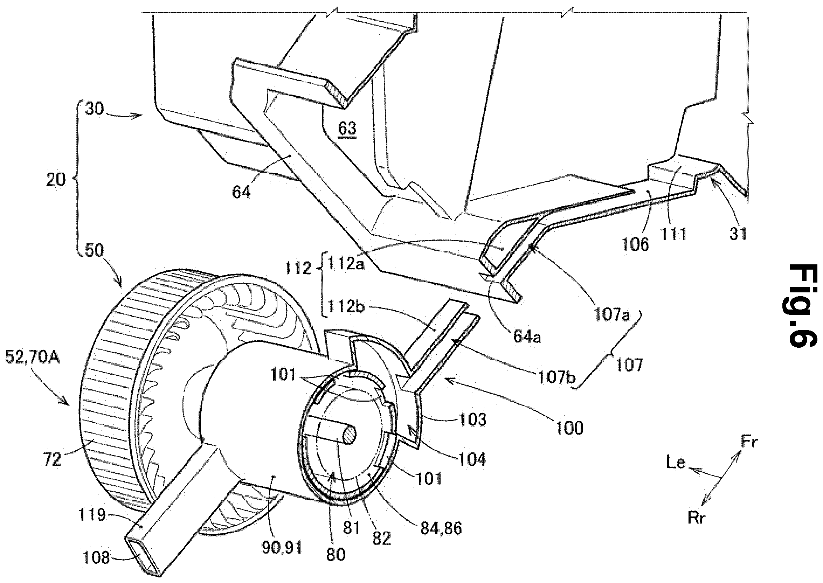

As illustrated in Figs. 3 and 6, at least a portion 107a (first guide passage 107a) of this guide passage 107 is formed integrally with the housing 31. This can make simpler configurations of the guide passage 107. A rest 107b (second guide passage 107b) of the guide passage 107 is formed integrally with the cover 90.

This guide passage 107 is an internal passage formed by a guide pipe 112. The guide pipe 112 is formed from a first guide pipe 112a that forms the first guide passage 107a and a second guide pipe 112b that forms the second guide passage 107b.

More specifically, the first guide passage 107a and the first guide pipe 112a extend along the bottom plate 111 of the housing 31 to the flange 64 (first flange 64) of the rear seat delivery port 63 of the housing 31. In addition, a tip end portion of the first guide pipe 112a serves as a through-hole 64a of the first flange 64.

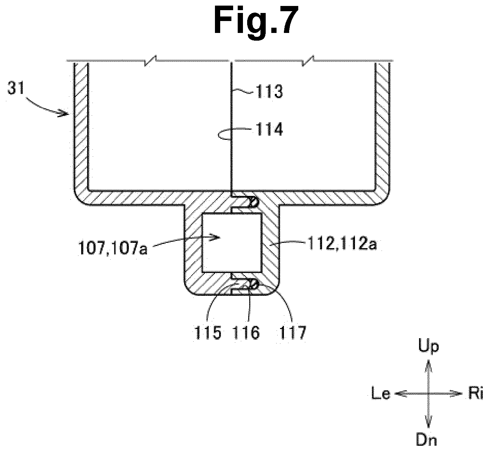

As illustrated in Fig. 7, the housing 31 is formed from a structure of split parts obtained by splitting the housing 31 into two parts at least in the vehicle width direction. The first guide pipe 112a is located on split surfaces 113 and 114 of the housing 31 and thus split into two parts in the vehicle width direction. One split surface 113 has a protruding portion 115 protruding toward the other split surface 114. The other split surface 114 has a recess groove 116 into which the protruding portion 115 can be fitted. The protruding portion 115 is fitted into the recess groove 116. A seal member 117 is accommodated in a compressed state between a tip end of the protruding portion 115 and a bottom of the recess groove 116. As a result, the split parts of the housing 31 and the first guide passage 107a are sealed.

As illustrated in Fig. 3, the second guide passage 107b extends from the first opening 104 of the cover 90 to the flange 65 (second flange 65) of the suction port 61 of the suction case 60. That is, the second guide pipe 112b extends from the bulge section 103 of the cover 90 to the second flange 65. A tip end portion of the second guide pipe 112b is inserted into a through-hole 65a of the second flange 65.

With such configurations, simply surface joining the first flange 64 with the second flange 65 enables easy connection between the guide pipes 112a and 112b.

Surface joint surfaces of the first flange 64 and the second flange 65 are sealed by a sheet packing 118. Owing to this, mating surfaces of the first guide passage 107a and the second guide passage 107b are also sealed by the packing 118.

As illustrated in Fig. 5, the discharge passage 108 discharges the air for cooling the motor after passing through the second fan driving motor 80 to the cabin 11. This discharge passage 108 is an internal passage formed by a discharge pipe 119 and is provided, for example, integrally with the cover 90. The second opening 105 provided in the cover 90 can communicate the air outlet holes 102 with the discharge passage 108.

Operations of the air-cooling device 100 will next be described with reference to Figs. 2 and 4. Part of the air flowing downstream of the first fan 32 and upstream of the temperature regulation door 43 in the air flow passage 33 enters the first opening 104 from the air guide port 106 via the guide passage 107. The air entering the first opening 104 enters the air inlet holes 101 of the motor case 84, initially cools surroundings of the base 89 and then cools the rotor 82, the stator 83, and the brush 88. After cooling, the air exits from the air outlet holes 102 of the motor case 84 and enters the second opening 105. The air entering the second opening 105 is discharged from the discharge passage 108 to the cabin 11.

The description of the vehicle air conditioner 20 according to the first embodiment is summarized as follows.

As illustrated in Fig. 2, the air for cooling the motor (motor cooling air) guided from downstream of the first fan 32 and upstream of the temperature regulation door 43 cools the second fan driving motor 80, and the air after cooling this second fan driving motor 80 is discharged to atmospheric air. Owing to this, the second fan driving motor 80 is not affected by heat of the warm air heated by the heater core 42. In the vehicle air conditioner 20 that includes: the air conditioner main body section 30 including the first fan 32; the duct for rear seats 51; and the second fan 52 that is coupled to the duct for rear seats 51 for securing an air volume of the conditioned air circulating in this duct for rear seats 51, the second fan driving motor 80 can be efficiently cooled by the motor cooling air. Furthermore, the motor cooling air is directly discharged to the cabin 11 and is not mixed with the conditioned air circulating in the duct for rear seats 51; thus, an entire system of the vehicle air conditioner 20 is not affected. Moreover, as can be understood from Figs. 2 and 4, the discharge passage 108 discharges the motor cooling air to the cabin 11 in a space near the front seats; thus, a temperature of the space near the rear seats is not, in particular, affected.

Furthermore, the air guide port 106 is located downstream of the evaporator 41. Owing to this, the inside air cooled by the evaporator 41 and the outside air (motor cooling air) can efficiently cool the second fan driving motor 80.

Moreover, the second fan driving motor 80 is covered with the cover 90. Owing to this, the second fan driving motor 80 is not directly exposed to the warm air heated by the heater core 42. It is possible to further prevent the second fan driving motor 80 from being affected by the heat of the warm air heated by the heater core 42.

Additionally, as illustrated in Fig. 5, the motor cooling air passes through the guide passage 107 and the first opening 104 of the cover 90, flows into the motor case 84 from the air inlet holes 101, and cools an interior of the second fan driving motor 80. The motor cooling air after cooling the interior of the second fan driving motor 80 passes through the second opening 105 of the cover 90 and the discharge passage from the air outlet holes 102 of the motor case 84, and is discharged to the atmospheric air. Owing to this, the interior of the second fan driving motor 80 can be entirely, finely, efficiently cooled by the motor cooling air. It is thereby possible to sufficiently improve a durability of the second fan driving motor 80.

A reason for providing the air guide port 106 in the bottom plate 111 in the housing 31 will now be described.

As illustrated in Fig. 1, the air conditioner main body section 30 is disposed in the front portion of the vehicle 10, e.g., in an instrument panel 14. It is preferable to secure a foot space for passenger to be seated in the front seats 13 in the cabin 11 below this instrument panel 14. Owing to this, a bottom surface of the air conditioner main body section 30, particularly the bottom plate 111 of the housing 31 is set higher than a floor surface 15 of the cabin 11. On the other hand, the duct for rear seats 51 extends in a vehicle longitudinal direction between a driver's seat and a front passenger seat. To secure the foot space of each passenger, a lower surface 51a of the duct for rear seats 51 is set at a height at which the lower surface 51a generally comes in contact with the floor surface 15 of the cabin 11. Owing to this, the second fan 52 is located rearward and downward of the housing 31. The second fan driving motor 80 is located below the bottom plate 111 of the housing 31.

While the air conditioner main body section 30 and the duct unit for rear seats 50 are disposed in this way, the air guide port 106, which guides the air cooling the motor, illustrated in Fig. 2 can be provided in a part other than the bottom plate 111 of the housing 31.

However, as illustrated in Figs. 1 and 2, the air conditioner main body section 30 including the housing 31 is required to be disposed in a limited space in the front portion of the vehicle 10. In addition, this air conditioner main body section 30 needs to have sufficient functions to regulate (condition) the air fed from the first fan 32 and to supply the air from the plurality of air outlets (delivery sections) into the cabin 11. There is no avoiding, therefore, limiting a degree of freedom of designing the air conditioner main body section 30. Under such severe conditions, it is inadequate, from the viewpoint of space saving and cost effectiveness, to provide the air guide port 106 on a side or upper surface of the housing 31 and to pass the guide passage 107 from the air guide port 106 to the second fan driving motor 80 in a narrow space even in a current situation. This is because this guide passage 107 is forced to have complicated configurations to pass through the guide passage 107 without interference with other members.

To solve the problems, the inventor of the present invention has discovered that the only ample space below the bottom plate 111 of the housing 31 may be made effective use of, as illustrated in Fig. 2. To this end, the inventor of the present invention has decided to provide the air guide port 106 in the bottom plate 111 of the housing 31. It is, therefore, possible to pass through the short guide passage 107 below the bottom plate 111, and providing the guide passage 107 in this way is, thus, quite useful from the viewpoint of space saving and cost effectiveness. This is why the air guide port 106 is provided in the bottom plate 111 of the housing 31.

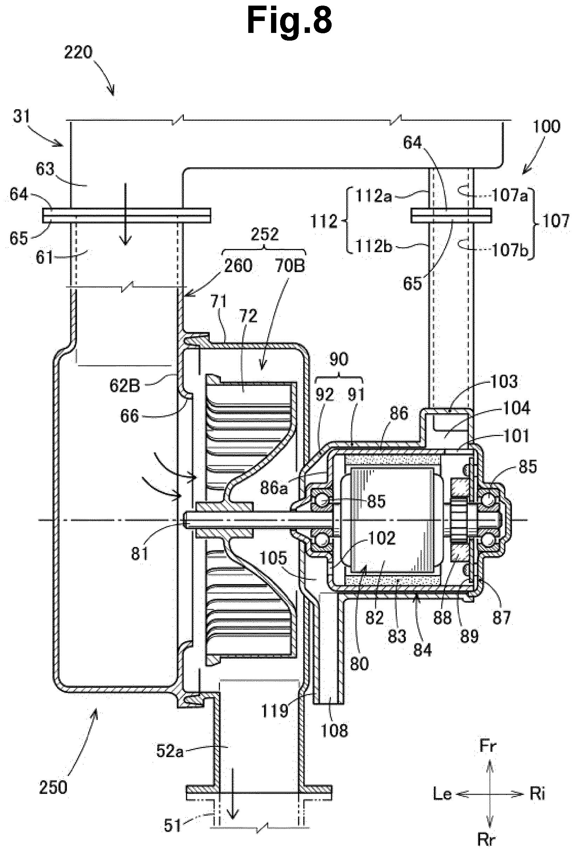

A vehicle air conditioner 220 according to a second embodiment will next be described with reference to Fig. 8.

### <Second embodiment>

Fig. 8 illustrates cross-sectional configurations of a duct unit for rear seats 250 in the vehicle air conditioner 220 according to the second embodiment, and corresponds to cross-sectional positions in Fig. 4.

The vehicle air conditioner 220 according to the second embodiment is characterized in that the duct unit for rear seats 50 according to the first embodiment illustrated in Figs. 1 to 7 is changed to the duct unit for rear seats 250 illustrated in Fig. 8. The other basic configurations of the vehicle air conditioner 220 are the same as those of the vehicle air conditioner 20 according to the first embodiment. The same elements as those of the vehicle air conditioner 20 according to the first embodiment are denoted by the same reference signs and not described in detail.

A second fan 252 in the duct unit for rear seats 250 according to the second embodiment includes only one of the first fan section 70A and the second fan section 70B illustrated in Fig. 4, e.g., only the second fan section 70B. That is, this second fan 252 is formed from a suction case 260 and the one fan section 70B provided on one end in the vehicle width direction with respect to this suction case 60. For this reason, only one duct for rear seats 51 is provided.

The suction case 260 is a member used as an alternative to the suction case 60 according to the first embodiment (refer to Fig. 4), and includes the suction port 61 and the partition wall 62B (second partition wall 62B) only on one end of the suction case 260 in the vehicle width direction.

The second fan driving motor 80 drives only one fan section 70B. According to the second embodiment, the second fan driving motor 80 is unnecessary to accommodate in the suction case 260. That is, the second fan driving motor 80 is disposed outside of the suction case 260 and supported by, for example, the fan case 71. Owing to this, the second fan driving motor 80 is not exposed to the warm air heated by the heater core 42 (refer to Fig. 2) and, therefore, is not directly affected by the heat of this warm air. This is useful for improving the durability of the second fan driving motor 80.

The vehicle air conditioner 220 according to the second embodiment can exhibit similar effects to those of the vehicle air conditioner 20 according to the first embodiment.

It is noted that the present invention is not limited to the embodiments as long as the operations and effects of the present invention can be exhibited.

The first fan 32, for example, is not limited to the configurations to be located upstream of the evaporator 41 and may be configured to be located downstream of the evaporator 41.

Furthermore, the second fan 52, 252 may be configured to suction and deliver the conditioned air from the housing 31. That is, the second fan 52, 252 is not limited to the configurations to suction the conditioned air from the housing 31 and to deliver the conditioned air to the duct for rear seats 51, and includes, for example, configurations to be connected to a downstream side of the duct for rear seats 51.

Moreover, the second fan driving motor 80 is not limited to the configurations of the inner rotor type brush motor and may be configured as, for example, an outer rotor type motor or a brushless motor.

Furthermore, the air inlet holes 101 and the air outlet holes 102 may be provided in the motor case 84 and are not limited to specific positions in the motor case 84.

Moreover, the first opening 104 may be able to communicate the guide passage 107 with the air inlet holes 101. The second opening 105 may be able communicate the air outlet holes 102 with the discharge passage 108.

Furthermore, the vehicle in which this vehicle air conditioner 20, 220 is mounted is not limited to a vehicle of so-called two seat rows including the front seats and the rear seats as illustrated in Fig. 1, and this vehicle air conditioner 20, 220 may be mounted in a vehicle of so-called three seat rows including front seats, second-row seats, and third-row seats. In this case, the duct unit for rear seats 50 is provided to supply the conditioned air to a space of the second-row seats.

### Industrial Applicability

The vehicle air conditioner 20, 220 of the present invention is suited for being mounted in the vehicle 10 such as a passenger vehicle.

### Description of Reference Characters

10: Vehicle
11: Cabin
12: Rear seats
20: Vehicle air conditioner
30: Air conditioner main body section
31: Housing
32: First fan
33: Air flow passage
41: Evaporator
42: Heater core
43: Temperature regulation door
50: Duct unit for rear seats
51: Duct for rear seats
52: Second fan
80: Second fan driving motor
81: Rotary shaft (motor shaft)
84: Motor case
90: Cover
101: Air inlet hole
102: Air outlet hole
104: First opening (first space section)
105: Second opening (second space section)
106: Air guide port
107: Guide passage
108: Discharge passage
220: Vehicle air conditioner
250: Duct unit for rear seats
252: Second fan

## Claims

1. A vehicle air conditioner (20) comprising:
an air conditioner main body section (30) including a housing (31) that has an air flow passage (33) provided inside; a first fan (32) that feeds air guided from inside of a cabin (11) and/or outside of the cabin (11) to the air flow passage (33); an evaporator (41) that is provided in the air flow passage (33); a heater core (42) that is provided downstream of the evaporator (41); and a temperature regulation door (43) that is provided between the evaporator (41) and the heater core (42) and that regulates a ratio of air heading for the heater core (42) to air bypassing the heater core (42); and
a duct unit for rear seats (50) that is connected to a downstream side of the heater core (42) in the housing (31) and that guides conditioned air temperature-regulated by the air conditioner main body section (30) to rear seats of the cabin (11), the duct unit for rear seats (50) including a second fan (52) that suctions and delivers the conditioned air and a duct for rear seats (51),
the duct unit for rear seats (50) having a second fan driving motor (80) that directly drives a centrifugal fan (72) accommodated in a fan case (71) of the second fan (52) by a rotary shaft (81), wherein the vehicle air conditioner (20) comprises:
an air guide port (106) that opens to the housing (31) to guide air for cooling a motor from downstream of the first fan (32) and upstream of the temperature regulation door (43) in the air flow passage (33);
a guide passage (107) that guides the air for cooling the motor guided from the air guide port (106) to the second fan driving motor (80); and **characterised by**,
a discharge passage (108) that discharges the air for cooling the motor after passing through the second fan driving motor (80) to the cabin (11).

2. The vehicle air conditioner according to claim 1, wherein
the air guide port (106) is located downstream of the evaporator (41).

3. The vehicle air conditioner according to claim 1 or 2, wherein
the air guide port (106) is provided in a bottom plate (111) in the housing (31).

4. The vehicle air conditioner according to any one of claims 1 to 3, wherein
at least a portion (107a) of the guide passage (107) is formed integrally with the housing (31).

5. The vehicle air conditioner according to any one of claims 1 to 4, wherein
the second fan driving motor (80) includes a cylindrical motor case (84) that extends along the rotary shaft (81),
the motor case (84) includes an air inlet hole (101) that is provided on one side of the rotary shaft (81) in an axial direction, and an air outlet hole (102) that is provided on other side of the rotary shaft (81) in the axial direction,
the duct unit for rear seats (50) includes a cover (90) that entirely covers at least an outer peripheral surface of the motor case (84), and
the cover (90) includes a first opening (104) that can communicate the guide passage (107) with the air inlet hole (101), and a second opening (105) that can communicate the air outlet hole (102) with the discharge passage (108).

## Patentansprüche

1. Fahrzeugklimaanlage (20), umfassend:
einen Klimaanlagenhauptkörperabschnitt (30), der ein Gehäuse (31), das einen innen vorgesehenen Luftströmungsdurchgang (33) aufweist, ein erstes Gebläse (32), das Luft zuführt, die vom Inneren eines Fahrgastraums (11) und/oder außerhalb des Fahrgastraums (11) zu dem Luftströmungsdurchgang (33) geleitet wird, einen Verdampfer (41), der in dem Luftströmungsdurchgang (33) vorgesehen ist, einen Heizungswärmetauscher (42), der stromabwärts des Verdampfers (41) vorgesehen ist, und eine Temperaturregelklappe (43) aufweist, die zwischen dem Verdampfer (41) und dem Heizungswärmetauscher (42) vorgesehen ist und die ein Verhältnis von Luft, die zu dem Heizungswärmetauscher (42) geht, zu Luft, die den Heizungswärmetauscher (42) umgeht, regelt, und
eine Kanaleinheit (50) für Rücksitze, die mit einer stromabwärtigen Seite des Heizungswärmetauschers (42) in dem Gehäuse (31) verbunden ist und die klimatisierte Luft, die durch den Klimaanlagenhauptkörperabschnitt (30) temperiert wird, zu Rücksitzen des Fahrgastraums (11) führt, wobei die (50) Kanaleinheit für Rücksitze ein zweites Gebläse (52), das die klimatisierte Luft ansaugt und zuführt, und einen Kanal (51) für Rücksitze aufweist, wobei die Kanaleinheit (50) für Rücksitze einen zweiten Gebläseantriebsmotor (80) aufweist, der ein Zentrifugalgebläse (72), das in einem Gebläsegehäuse (71) des zweiten Gebläses (52) untergebracht ist, durch eine Drehwelle (81) direkt antreibt, wobei die Fahrzeugklimaanlage (20) Folgendes umfasst:
eine Luftführungsöffnung (106), die sich zu dem Gehäuse (31) öffnet, um Luft zum Kühlen eines Motors von stromabwärts des ersten Gebläses (32) und stromaufwärts der Temperaturregelklappe (43) in dem Luftströmungsdurchgang (33) zu leiten,
einen Führungsdurchgang (107), der die zum Kühlen des Motors von der Luftführungsöffnung (106) zu dem zweiten Gebläseantriebsmotor (80) geführte Luft führt, und **gekennzeichnet durch**:
einen Austragdurchgang (108), der die Luft zur Kühlung des Motors nach Durchlaufen des zweiten Gebläseantriebsmotors (80) in den Fahrgastraum (11) austrägt.

2. Fahrzeugklimaanlage nach Anspruch 1, wobei
die Luftführungsöffnung (106) stromabwärts des Verdampfers (41) angeordnet ist.

3. Fahrzeugklimaanlage nach Anspruch 1 oder 2, wobei
die Luftführungsöffnung (106) in einer Bodenplatte (111) in dem Gehäuse (31) vorgesehen ist.

4. Fahrzeugklimaanlage nach einem der Ansprüche 1 bis 3, wobei
mindestens ein Abschnitt (107a) des Führungsdurchgangs (107) integral mit dem Gehäuse (31) ausgebildet ist.

5. Fahrzeugklimaanlage nach einem der Ansprüche 1 bis 4, wobei
der zweite Gebläseantriebsmotor (80) ein zylindrisches Motorgehäuse (84) aufweist, das sich entlang der Drehwelle (81) erstreckt,
das Motorgehäuse (84) eine Lufteinlassöffnung (101), die auf einer Seite der Drehwelle (81) in einer axialen Richtung vorgesehen ist, und eine Luftauslassöffnung (102), die auf einer anderen Seite der Drehwelle (81) in der axialen Richtung vorgesehen ist, aufweist,
die Kanaleinheit (50) für Rücksitze eine Abdeckung (90) aufweist, die mindestens eine äußere Umfangsfläche des Motorgehäuses (84) vollständig abdeckt, und
die Abdeckung (90) eine erste Öffnung (104), die den Führungsdurchgang (107) mit der Lufteinlassöffnung (101) verbinden kann, und eine zweite Öffnung (105), die die Luftauslassöffnung (102) mit dem Auslassdurchgang (108) verbinden kann, aufweist.

## Revendications

1. Climatiseur de véhicule (20) comprenant :
une section formant corps principal de climatiseur (30) comprenant un boîtier (31) qui comporte un passage d'écoulement d'air (33) défini dans celui-ci ; un premier ventilateur (32) qui introduit de l'air guidé depuis l'intérieur d'un habitacle (11) et/ou l'extérieur de l'habitacle (11) dans le passage d'écoulement d'air (33) ; un évaporateur (41) qui est placé dans le passage d'écoulement d'air (33) ; un faisceau de radiateur (42) qui est placé en aval de l'évaporateur (41) ; et un volet de régulation de température (43) qui est placé entre l'évaporateur (41) et le faisceau de radiateur (42) et qui régule un rapport de l'air dirigé vers le faisceau de radiateur (42) sur l'air contournant le faisceau de radiateur (42) ; et
une unité formant conduit (50) pour sièges arrière qui est raccordée à un côté aval du faisceau de radiateur (42) dans le boîtier (31) et qui guide de l'air climatisé dont la température a été régulée par la section formant corps principal de climatiseur (30) vers des sièges arrière de l'habitacle (11), l'unité formant conduit (50) pour sièges arrière comprenant un second ventilateur (52) qui aspire et refoule l'air climatisé et un conduit (51) pour sièges arrière,
l'unité formant conduit (50) pour sièges arrière comportant un moteur d'entraînement de second ventilateur (80) qui entraîne directement un ventilateur centrifuge (72) logé dans un carter de ventilateur (71) du second ventilateur (52) par le biais d'un arbre rotatif (81),
le climatiseur de véhicule (20) comprenant :
un orifice de guidage d'air (106) qui débouche dans le boîtier (31) pour guider de l'air pour refroidir un moteur depuis une section en aval du premier ventilateur (32) et en amont du volet de régulation de température (43) dans le passage d'écoulement d'air (33) ;
un passage de guidage (107) qui guide l'air pour refroidir le moteur guidé depuis l'orifice de guidage d'air (106) jusqu'au moteur d'entraînement de second ventilateur (80) ; et **caractérisé par**
un passage de rejet (108) qui rejette l'air pour refroidir le moteur après son passage à travers le moteur d'entraînement de second ventilateur (80) dans l'habitacle (11).

2. Climatiseur de véhicule selon la revendication 1, dans lequel
l'orifice de guidage d'air (106) est situé en aval de l'évaporateur (41).

3. Climatiseur de véhicule selon la revendication 1 ou 2, dans lequel
l'orifice de guidage d'air (106) est défini dans une plaque inférieure (111) dans le boîtier (31).

4. Climatiseur de véhicule selon l'une quelconque des revendications 1 à 3, dans lequel
au moins une partie (107a) du passage de guidage (107) fait corps avec le boîtier (31).

5. Climatiseur de véhicule selon l'une quelconque des revendications 1 à 4, dans lequel
le moteur d'entraînement de second ventilateur (80) comprend un carter de moteur (84) cylindrique qui s'étend le long de l'arbre rotatif (81),
le carter de moteur (84) comprend un trou d'entrée d'air (101) qui est défini sur un côté de l'arbre rotatif (81) dans une direction axiale, et un trou de sortie d'air (102) qui est défini sur l'autre côté de l'arbre rotatif (81) dans la direction axiale,
l'unité formant conduit (50) pour sièges arrière comprend une enveloppe (90) qui recouvre entièrement au moins une surface périphérique extérieure du carter de moteur (84), et
l'enveloppe (90) comprend une première ouverture (104) qui peut mettre le passage de guidage (107) en communication avec le trou d'entrée d'air (101), et une seconde ouverture (105) qui peut mettre le trou de sortie d'air (102) en communication avec le passage de rejet (108).
